# EUROPEAN PATENT APPLICATION

(11) **EP 1 052 625 A2**
(43) Date of publication of application: **15.11.2000**
(21) Application number: 00303944.3
(22) Date of filing: 10.05.2000
(51) Int. Cl.: G11B 5/48

(54) **Magnetic recording/reproducing apparatus**

(30) Priority: 11.05.1999 JP 13035499
(71) Applicant: SONY CORPORATION, Tokyo 141 (JP)
(72) Inventor: Shimpuku, Yoshihide, Shinagawa-ku, Tokyo 141 (JP); Okazaki, Yutaka, Shinagawa-ku, Tokyo 141 (JP); Ino, Hiroyuki, Shinagawa-ku, Tokyo 141 (JP); Higashino, Satoru, Shinagawa-ku, Tokyo 141 (JP)
(74) Representative: Horner, David Richard

(57) **Abstract**

A magnetic recording/reproducing apparatus is disclosed with which levitation of the magnetic head can be prevented in case of the speed of rotation of the magnetic disc is raised when a recording/reproducing is performed, the recording density and the transfer rate can furthermore be raised and the amount of abrasion of the magnetic head can be reduced. When a recording/reproducing operation with respect to a magnetic disc is performed, a magnetic disc is rotated by a spindle motor. A magnetic head included in a head structure supported by a suspension is operated to perform recording/reproducing with respect to the magnetic discs. At this time, the head structure is supported such that a load which is exerted from the head structure on the magnetic disc satisfies a range from 75 mgf to 500 mgf. Since the load which is exerted from the head structure on the magnetic disc is specified, the amount of abrasion of the magnetic head can be reduced, a stable state of contact between the magnetic disc and the head structure can be maintained and the recording density and the transfer rate can be raised.

## Description

### BACKGROUND OF THE INVENTION

### Field of the Invention

The present invention relates to a magnetic recording/reproducing apparatus for recording/reproducing data with respect to a magnetic disc which preferably incorporates a magnetic layer formed on a resin substrate thereof.

### Description of the Related Art

Hitherto, a 3.5-inch microfloppy disc (MFD-2DD, MFD-2HD and the like) has widely been used as a magnetic disc for recording digital data. In recent years, digital data in a large quantity is frequently recorded/reproduced. Therefore, raising of the recording density and the transfer rate of the magnetic disc has been required as compared with those of the 3.5-inch microfloppy disc.

For example, the conventional 3.5-inch microfloppy disc has a recording capacity of about 1 Mbyte. In recent years, even a small-size and thin recording/reproducing apparatus which can be included in a portable personal computer, a portable digital audio apparatus or a digital camera is required to have a recording capacity of 100 Mbyte or larger. Therefore, even a small-size magnetic disc is required to have a recording capacity of 100 Mbyte or larger.

The conventional 3.5-inch microfloppy disc is rotated at 300 rpm when a recording/reproducing operation is performed. Magnetic discs developed in recent years are arranged to be rotated at about 3000 rpm to about 4000 rpm in order to raise the data transfer rate.

When the speed of rotation of the magnetic disc is raised to about 3000 rpm to raise the data transfer rate, buoyancy is exerted on the magnetic head on the magnetic disc. As the magnetic disc having a recording density and a transfer rate higher than those of the 3.5-inch microfloppy disc, Zip, HiFD and the like have been commercialized. Each of magnetic heads for the foregoing magnetic discs is slightly levitated owing to the exerted buoyancy.

If the magnetic head is levitated when the magnetic disc is recorded/reproduced, a gap is produced between the surface of the magnetic disc and the magnetic head. Thus, a so-called "spacing loss" occurs. The spacing loss causes the S/N ratio and the error rate to deteriorate when a recording/reproducing operation is performed. Therefore, a recording/reproducing operation which is performed in a state where the magnetic head is levitated inhibits raising the recording density and the transfer rate.

If the magnetic head is pressed against the magnetic disc so as to be brought into contact with the magnetic disc and slid along the surface of the magnetic disc, the spacing loss can be prevented. If the magnetic head is brought into contact with the magnetic disc so as to be slid along the surface of the magnetic disc, excessive abrasion of the magnetic head occurs when the speed of rotation is raised. Thus, there arises a problem in that a satisfactory long life of the magnetic head cannot be obtained.

### SUMMARY OF THE INVENTION

Embodiments of the present invention provide a magnetic recording/reproducing apparatus with which levitation of a magnetic head can be prevented in case of the speed of rotation of a magnetic disc is raised when a recording/reproducing operation is performed, which is able to raise the recording density and the transfer rate and which is capable of reducing an amount of abrasion of the magnetic head.

According to one aspect of the invention, there is provided a magnetic recording/reproducing apparatus for recording/reproducing a magnetic disc which incorporates a magnetic layer formed on a resin substrate thereof, the magnetic recording/reproducing apparatus comprising: a head structure including a magnetic head; support means for supporting the head structure; and rotating means for rotating a magnetic disc when the magnetic disc is recorded and/or reproduced. The head structure incorporates a slider which is brought into contact with the magnetic disc and slid along the surface of the magnetic disc when an operation for recording and/or reproducing the magnetic disc is performed and which includes a magnetic head for recording a magnetic signal on the magnetic disc and/or reproducing a magnetic signal from the magnetic disc. The support means supports the head structure in such a manner that the head structure exerts a load which satisfies a range from 75 mgf to 500 mgf on the magnetic disc which is rotated by the rotating means when the magnetic disc is recorded and/or reproduced.

The magnetic recording/reproducing apparatus according to embodiments of the present invention is arranged to record and/or reproduce a magnetic head such that the magnetic disc is rotated by the rotating means. Moreover, the magnetic head included in the head structure supported by the support means is operated to record and/or reproduce the magnetic head. At this time, the support means supports the head structure in such a manner that the head structure exerts a load which satisfies a range from 75 mgf to 500 mgf on the magnetic disc. Since the load of the head structure which is exerted on the magnetic disc is specified as described above, a stable state of contact between the magnetic disc and the head structure can be maintained while the amount of abrasion of the magnetic head is being reduced.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a plan view showing the schematic internal structure of a magnetic recording/reproducing apparatus according to an embodiment of the present invention;
Fig. 2 is a cross sectional view schematically showing a portion in the vicinity of a spindle motor mounted on the magnetic recording/reproducing apparatus shown in Fig. 1;
Fig. 3 is a plan view showing the schematic structure of a head structure which is mounted on the magnetic recording/reproducing apparatus shown in Fig. 1 in a state where the head structure is viewed from the surface of a magnetic disc opposite to the head structure;
Fig. 4 is a diagram showing a state where the head structure mounted on the magnetic recording/reproducing apparatus shown in Fig. 1 is in contact with the magnetic disc;
Fig. 5 is a graph showing the examined relationship between the width of an opening formed in a cartridge and an amount of wobbling of the magnetic head when the magnetic disc is being rotated;
Fig. 6 is a graph showing the examined relationship between the load which is exerted from the head structure on the magnetic disc and a half width PW50 of a recording and reproducing solitary wave and the examined relationship between the load which is exerted from the head structure on the magnetic disc and an amount of abrasion of the magnetic head included in the head structure;
Fig. 7 is a block diagram showing a circuit structure in the magnetic recording/reproducing apparatus shown in Fig. 1;
Fig. 8 is a diagram showing a flow of a recording/reproducing signal which is used when the magnetic recording/reproducing apparatus shown in Fig. 1 records/reproduces the magnetic disc;
Fig. 9 is a diagram showing an example a logic circuit of partial response, in which Fig. 9A shows a logic circuit of a class 1 partial response, Fig. 9B shows a logic circuit of a class 2 partial response and Fig. 9C shows a logic circuit of a class 4 partial response;

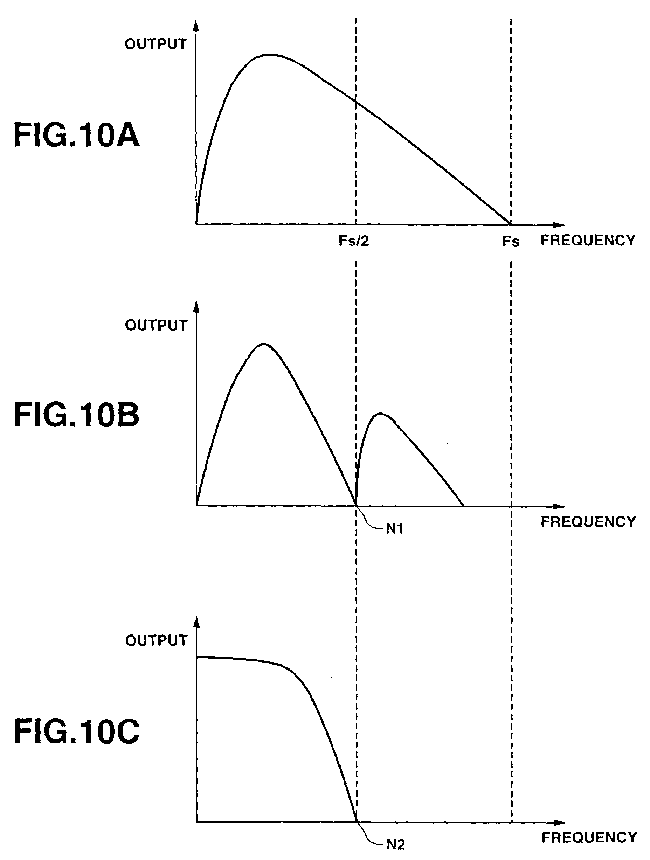

Fig. 10 is a graph showing an example of the frequency characteristic realized when the class 1 partial response is employed to perform record/reproducing, in which Fig. 10A is a graph showing the frequency characteristic of a recording code before a modulation circuit performs a modulation process, Fig. 10B is graph showing the frequency characteristic of the recording code after the modulation circuit has performed a modulation process and Fig. 10C is a graph showing the frequency characteristic of a signal obtained by subjecting a reproduced signal to a waveform equalizing process using class 1 partial response;
Fig. 11 is a diagram showing a fact that the distance between signal points is enlarged in the output from a transmission passage when the partial response is used, in which Fig. 11A is a trellis graph realized by a Bit by Bit method, Fig. 11B is a trellis graph realized by a PRML method and Fig. 11C is a trellis graph realized by a TCPR method;
Fig. 12 is a graph showing the relationship between the bit error rate and the S/N ratio realized at the time of ON-track for each of the Bit by Bit method, the PRML method and the TCPR method;
Fig. 13 is a diagram showing conditions under which the OFF-track characteristic is measured; and
Fig. 14 is a diagram showing the examined relationship between OFF-track margins and linear recording densities in each of the modulation and demodulation methods employed when a recording/reproducing operation is performed.

### Detailed Description of the Preferred Embodiments

An embodiment of the present invention will now be described with reference to the drawings.

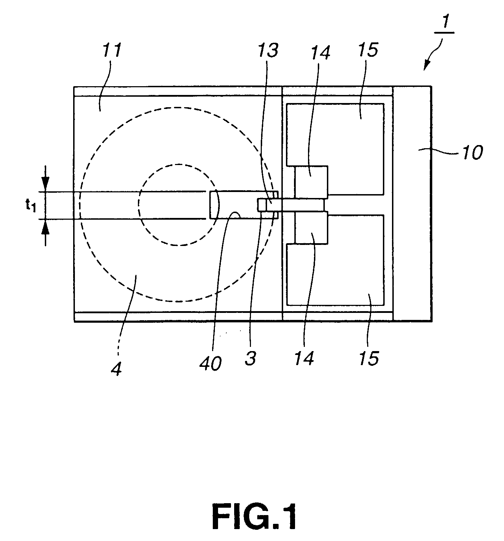

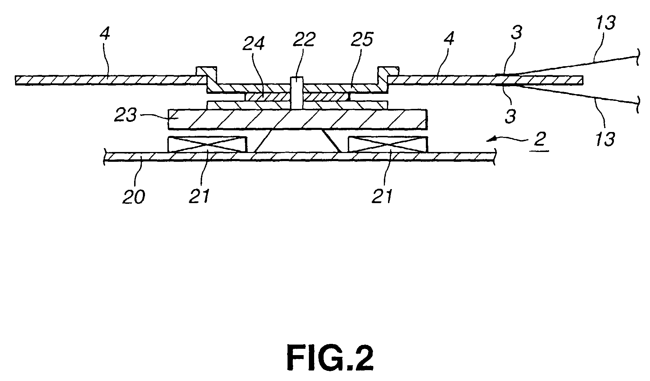

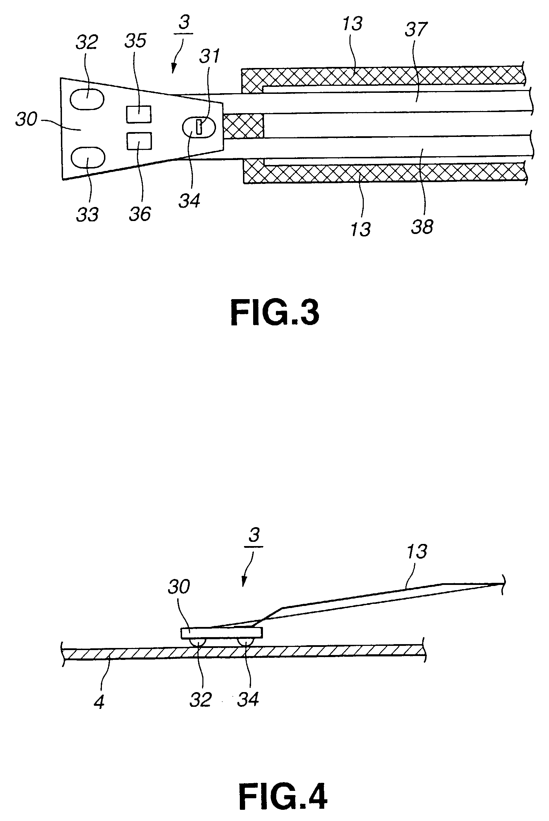

An example of the structure of a magnetic recording/reproducing apparatus according to an embodiment of the present invention is shown in Figs. 1 to 4. Fig. 1 is a plan view showing the schematic internal structure of the magnetic recording/reproducing apparatus 1 according to an embodiment of the present invention. Fig. 2 is a cross sectional view showing the schematic structures of a spindle motor 2 mounted on the magnetic recording/reproducing apparatus 1 and its vicinity. Fig. 3 is a plan view showing the schematic structure of a head structure 3 mounted on the magnetic recording/reproducing apparatus 1. Fig. 4 is a diagram showing a state where the head structure 3 mounted on the magnetic recording/reproducing apparatus 1 is in contact with a magnetic disc 4.

The magnetic recording/reproducing apparatus 1 has a size of the PC card regulated by PCMCIA (Personal Computer Memory Card International Association). Moreover, the magnetic recording/reproducing apparatus 1 incorporates a connector 10 for establishing the connection with the PC card slot, as shown in Fig. 1. Thus, the connection to type-2 or type-3 PC card slot is permitted. A magnetic disc 4 accommodated in a cartridge 11 is loaded into the magnetic recording/reproducing apparatus 1. Thus, the magnetic recording/reproducing apparatus 1 records/reproduces the magnetic disc 4.

In this embodiment, the magnetic recording/reproducing apparatus 1 is connected to the PC card slot. The size and arranged for use of the magnetic recording/reproducing apparatus according to embodiments of the present invention may arbitrarily be determined. Therefore, embodiments of the present invention are not limited to those in which the magnetic recording/reproducing apparatus 1 is arranged to be connected to the PC card slot.

As shown in Figs. 1 and 2, the magnetic recording/reproducing apparatus 1 incorporates a case having the size corresponding to the PC card and including a spindle motor 2 for rotating the magnetic disc 4 when the magnetic disc 4 is recorded/reproduced; a head structure 3 in which a magnetic head 31 is included in a slider 30; a suspension 13 for supporting the head structure 3; an actuator 14 for moving the head structure 3; and an electric circuit 15 for processing signals required to record/reproduce the magnetic disc 4. As shown in Fig. 2, the magnetic recording/reproducing apparatus 1 incorporates a pair of the head structure 3 and the suspension 13. Thus, the magnetic disc 4 is sandwiched between the head structure 3 and the suspension 13 so that the magnetic disc 4 is recorded/reproduced.

The spindle motor 2 of the magnetic recording/reproducing apparatus 1 is a rotating means for rotating the magnetic disc 4 when the magnetic disc 4 is recorded/reproduced. When the magnetic disc 4 is recorded/reproduced, the spindle motor 2 rotates the magnetic disc 4 at a speed of rotation of 3000 rpm or higher. As shown in Fig. 2, the spindle motor 2 incorporates an operation coil 21 secured to a frame 20; and a rotor 23 having the central portion to which the spindle 22 is joined. When an electric current is supplied to the operation coil 21, the rotor 23 is rotated. Therefore, the spindle 22 joined to the central portion of the rotor 23 is rotated. A chuck magnet 24 for securing the magnetic disc 4 is joined to the spindle 22. After the magnetic disc 4 has been mounted on the magnetic recording/reproducing apparatus 1, a hub 25 joined to the magnetic disc 4 is attracted to the chuck magnet 24. Thus, the magnetic disc 4 is secured to the spindle 22.

The magnetic recording/reproducing apparatus 1 causes the magnetic head 31 included in the head structure 3 to record/reproduce the magnetic disc 4 which is rotated by the spindle motor 2.

As shown in Figs. 3 and 4, the head structure 3 incorporates the slider 30 which is brought into contact with the magnetic disc 4 so as to slide on the magnetic disc 4 when the magnetic disc 4 is recorded/reproduced. The slider 30 includes the magnetic head 31 for recording a magnetic signal on the magnetic disc 4 and reproducing a magnetic signal from the magnetic disc 4.

As shown in Fig. 3, the slider 30 which constitutes the head structure 3 has three contact portions 32, 33 and 34 formed on the surface thereof which is opposite to the magnetic disc 4. The three contact portions 32, 33 and 34 are brought into contact with the magnetic disc 4 when the magnetic disc 4 is recorded/reproduced. The surface of the slider 30 which is opposite to the magnetic disc 4 is formed into, for example, a trapezoid. The two contact portions 32 and 33 are formed in the surface opposite to the magnetic disc 4 at positions distant from the suspension 13. The other contact portion 34 is formed in the surface opposite to the magnetic disc 4 at a position adjacent to the suspension 13. When the magnetic disc 4 is recorded/reproduced, each of the contact portions 32, 33 and 34 is brought into contact with the magnetic disc 4 at each point, as shown in Fig. 4.

The contact portion 34 of the contact portions 32, 33 and 34 formed adjacent to the suspension 13 includes the magnetic head 31. That is, the magnetic recording/reproducing apparatus 1 has the structure that the plural contact portions 32, 33 and 34 are provided for the surface of the slider 30 which is opposite to the magnetic disc 4. The slider 30 and the magnetic disc 4 are brought into point-contact with the magnetic disc 4. Moreover, the magnetic head 31 is included in one of the contact portions 32, 33 and 34. Since the foregoing structure is employed, stable contact between the magnetic head 31 and the magnetic disc 4 is maintained when a recording/reproducing operation is performed.

As shown in Fig. 3, the surface of the slider 30 opposite to the magnetic disc 4 has bonding pats 35 and 36 formed thereon. Terminals from the magnetic head 31 are connected to the bonding pats 35 and 36. Moreover, beams 37 and 38 constituted by good conductors are extended from the bonding pats 35 and 36. Thus, an electric signal can be communicated between the magnetic head 31 and the electric circuit 15.

It is preferable that the magnetic head 31 to be included in the slider 30 is an inductive-type magnetic head manufactured by a thin-film forming process. That is, the head structure 3 includes the magnetic head 31 which is arranged to record/reproduce the magnetic disc 4 and which is the inductive-type magnetic head manufactured by the thin-film forming process.

When the inductive-type magnetic head is included in the slider 30, it is preferable that the length of the magnetic gap and the track width of the inductive-type magnetic head are reduced. When the length of the magnetic gap and the track width are made to be small values, the recording density of the magnetic disc 4 can be raised. Specifically, the length of the magnetic gap of the inductive-type magnetic head is 0.3 µm or shorter. Moreover, the track width is 6 µm or shorter. Thus, the planar recording density can be raised to a value not lower than 500 Mbpi².

The inductive-type magnetic head manufactured by the thin-film forming process permits the size of a magnetic core for constituting a magnetic circuit through which a magnetic flux passes to considerably be reduced. Therefore, the inductance per turn of a winding wire of a coil which is wound around the magnetic core can considerably be reduced. As a result, the inductive-type magnetic head manufactured by the thin-film forming process permits increase in the number of windings of the coil to improve the sensitivity. Specifically, it is preferable that size of the magnetic core is of the order of µm and the number of windings of the coil which is wound around the magnetic core is 30 or larger. Thus, the sensitivity of the magnetic head 31 can considerably be improved. Therefore, the recording density of the magnetic disc 4 can significantly be raised.

Note that the head structure 3 may include a magnetoresistance-effect magnetic head manufactured by a thin-film forming process. The magnetoresistance-effect magnetic head having reproduction sensitivity superior to that of the inductive-type magnetic head has been disclosed. When the magnetoresistance-effect magnetic head of the foregoing type is included as the reproduction-only magnetic head, the reproduction characteristic of the magnetic head 31 can be improved. Thus, the recording density can furthermore be raised.

The head structure 3 is supported by the suspension 13. That is, the suspension 13 serves as a support means for supporting the head structure 3. When the magnetic disc 4 is recorded/reproduced, the suspension 13 applies a load to the head structure 3 in order to cause the slider 30 constituting the head structure 3 to be brought into contact and slid on the surface of the magnetic disc 4 which is rotated by the spindle motor 2. That is, the suspension 13 supports the head structure 3 while applying the load to the head structure 3 such that the suspension 13 presses the head structure 3 against the magnetic disc 4.

As described above, the head structure 3 is supported such that the head structure 3 is pressed against the magnetic disc 4. When the magnetic disc 4 is recorded/reproduced, the slider 30 constituting the head structure 3 is brought into contact and slid on the surface of the magnetic disc 4. Thus, occurrence of the spacing loss can be prevented. Therefore, the S/N ratio and the error rate during the recording/reproducing operation can be improved.

The suspension 13 supports the head structure 3 such that a load which is exerted from the head structure 3 on the magnetic disc 4 which is being rotated by the spindle motor 2 during the recording/reproducing operation of the magnetic disc 4 satisfies a range from 75 mgf to 500 mgf. Since the load which is exerted from the head structure 3 on the magnetic disc 4 is specified as described above, the amount of abrasion of the magnetic head 31 included in the head structure 3 can be reduced as can be understood from results of experiments to be described later. Moreover, stable contact between the magnetic head 31 and the magnetic disc 4 can be maintained.

It is preferable that a portion of the load which is exerted from the head structure 3 on the magnetic disc 4 which is the dead weight of the head structure 3 is 1/10 or smaller of the load which is exerted when the suspension 13 presses the head structure 3 against the magnetic disc 4. When the ratio of the portion of the load which is exerted from the head structure 3 on the magnetic disc 4 which is caused from the dead weight of the head structure 3 is high, the state of contact between the head structure 3 and the magnetic disc 4 becomes unstable. When the ratio of the load caused from the dead weight of the head structure 3 is high, the load which is exerted from the head structure 3 on the magnetic disc 4 is excessively changed between a state where the magnetic recording/reproducing apparatus 1 is placed vertically and a state where the same is placed laterally. As a result, the state of contact between the magnetic head 31 included in the head structure 3 and the magnetic disc 4 becomes unstable.

It is preferable that the load which is exerted owing to the dead weight of the head structure 3 is 1/10 or smaller of the load which is exerted when the suspension 13 presses the head structure 3 against the magnetic disc 4. Thus, a stable state of contact between the magnetic head 31 included in the head structure 3 and the magnetic disc 4 can be maintained.

Specifically, when the dead weight of the head structure 3 is about 2 mg, the load which is exerted from the head structure 3 on the magnetic disc 4 is made to be about 300 mgf. When the load which is exerted from the head structure 3 on the magnetic disc 4 is made to be sufficiently large with respect to the dead weight of the head structure 3, a stable state of contact between the magnetic head 31 included in the head structure 3 and the magnetic disc 4 can be maintained.

The head structure 3 supported by the suspension 13 as described above is moved by the actuator 14. The actuator 14 is arranged to move the head structure 3 supported by the suspension 13. The base portion of the suspension 13 having the leading end to which the head structure 3 is joined is joined to the actuator 14.

The actuator 14 moves the head structure 3 such that the slider 30 constituting the head structure 3 is brought into contact and slid on the surface of the magnetic disc 4 when the magnetic disc 4 has been loaded into the magnetic recording/reproducing apparatus 1. When the magnetic disc 4 is removed from the magnetic recording/reproducing apparatus 1, the magnetic disc 4 moves the head structure 3 such that the head structure 3 is moved away from the magnetic disc 4. When the magnetic disc 4 is recorded/reproduced, the actuator 14 moves the head structure 3 such that the magnetic head 31 included in the slider 30 is brought to a predetermined position of a subject which must be recorded or reproduced with respect to the magnetic disc 4.

The actuator 14 is able to move the head structure 3 in the radial direction of the magnetic disc 4 in a region from the outermost recording region of the magnetic disc 4 to the innermost recording region of the same. That is, the magnetic recording/reproducing apparatus 1 is a magnetic recording/reproducing apparatus having a linear-drive head arranged such that the magnetic head 31 is linearly moved in the radial direction of the magnetic disc 4.

The magnetic disc 4 which is recorded/reproduced by the magnetic recording/reproducing apparatus 1 has a magnetic layer formed on a resin substrate formed into a disc-like shape. The thickness of the resin substrate is about 0.1 mm or smaller. Moreover, the resin substrate has flexibility. That is, the magnetic disc 4 which is recorded/reproduced by the magnetic recording/reproducing apparatus 1 is not a hard disc, that is, the magnetic disc 4 is a so-called flexible disc.

A circular opening is formed at the center of the resin substrate constituting the magnetic disc 4. As shown in Fig. 2, a metal hub 25 is joined to the opening. When the magnetic disc 4 has been loaded into the magnetic recording/reproducing apparatus 1, the hub 25 is attracted by the chuck magnet 24 as described above. Thus, the magnetic disc 4 is secured to the spindle 22.

As shown in Fig. 1, the magnetic disc 4 is accommodated in the cartridge 11. In a state where the magnetic disc 4 is accommodated in the cartridge 11, the magnetic disc 4 can be loaded into the magnetic recording/reproducing apparatus 1 and removed from the magnetic recording/reproducing apparatus 1. That is, the magnetic disc 4 is a so-called a removable recording medium.

The cartridge 11 for accommodating the magnetic disc 4 has an opening 40 through which the head structure 3 is inserted when a recording/reproducing operation is performed. The opening 40 is formed into a rectangular shape at least from the outermost recording region of the magnetic disc 4 to the innermost recording region of the same. When the magnetic disc 4 is recorded/reproduced, the head structure 3 is introduced into the cartridge 11 through the opening 40. Thus, the slider 30 constituting the head structure 3 is brought into contact and slid on the surface of the magnetic disc 4.

In a state where the cartridge 11 accommodating the magnetic disc 4 has been removed from the magnetic recording/reproducing apparatus 1, the opening 40 is shut by a shutter joined to the cartridge 11. When the cartridge 11 has been loaded into the magnetic recording/reproducing apparatus 1, the shutter is opened. Thus, the magnetic disc 4 is exposed to the outside through the opening 40.

As described above, the opening 40 is formed at least from the outermost recording region of the magnetic disc 4 to the innermost recording region of the same. Moreover, the length (hereinafter called width t1) of the opening 40 in the circumferential direction of the magnetic disc 4 is 6 mm or shorter.

When the magnetic disc 4 is being rotated, the air pressure adjacent to the magnetic disc 4 is made to be different between the portion in which the opening 40 is formed and the other portion. When the width t1 of the opening 40 formed in the cartridge 11 is large, change in the air pressure occurs when the magnetic disc 4 is rotated. Therefore, wobbling of the magnetic disc 4 occurs. The magnetic disc 4 is constituted by the flexible resin substrate and arranged to be rotated at a high speed of rotation when a recording/reproducing operation is performed. Therefore, an influence of change in the air pressure at the opening 40 becomes conspicuous.

Therefore, the preferred embodiment of the present invention is structured such that the width t1 of the opening 40 formed in the cartridge 11 is made to be considerably smaller than that of the conventional 3.5-inch microfloppy disc. That is, the width t1 of the opening 40 is made to be 6 mm or smaller. Thus, the influence of the change in the air pressure can be prevented, causing occurrence of wobbling of the magnetic disc 4 when the magnetic disc 4 is rotated to be prevented.

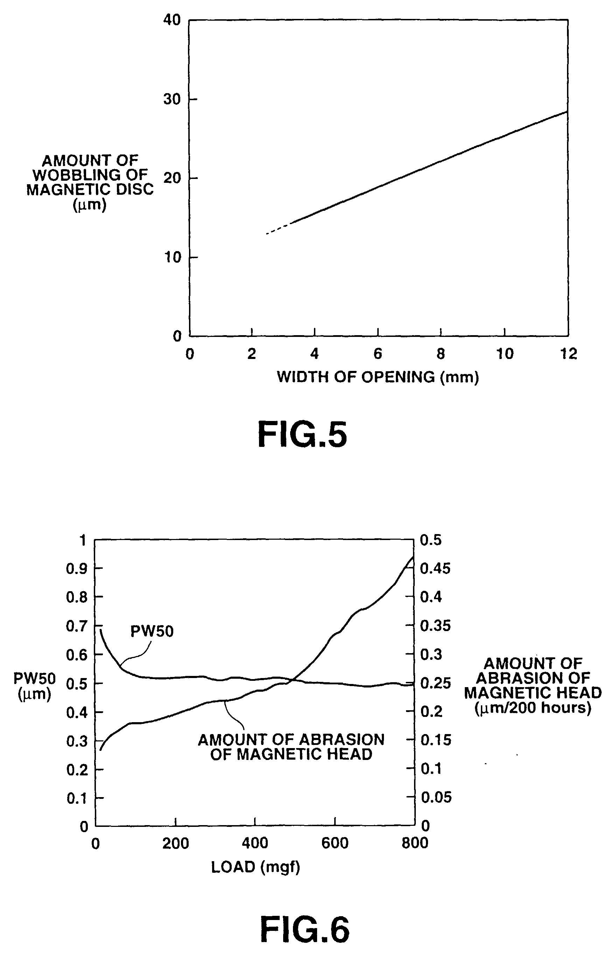

Fig. 5 shows results of examination of the relationship between the width t1 of the opening 40 formed in the cartridge 11 and the amount of wobbling occurring when the magnetic disc 4 is rotated. The amount of wobbling occurring when the magnetic disc 4 is rotated was measured by using a laser displacement meter. That is, the surface of the rotating magnetic disc 4 is irradiated with a laser beam through the opening 40 formed in the cartridge 11. Then, reflected light of the laser beam is detected so that the amount of wobbling occurring when the magnetic disc 4 is rotated was measured.

As the width t1 of the opening 40 formed in the cartridge 11 is enlarged, the amount of wobbling occurring when the magnetic disc 4 is rotated is enlarged, as shown in Fig. 5. When great wobbling occurs, the state of the contact between the magnetic head 31 and the magnetic disc 4 becomes unstable. As a result, the recording/reproducing operation cannot stably be performed. When an excessively large amount of wobbling occurs, the state of contact between the magnetic head 31 and the magnetic disc 4 becomes critically unstable. As a result, the surface of the magnetic disc 4 sometimes sustains damage.

The magnetic disc 4 is rotated at a high speed of 3000 rpm in order to raise the recording density and the transfer rate. Therefore, a stable state of contact between the magnetic head 31 and the magnetic disc 4 must be maintained. Therefore, the amount of wobbling must be about 20 µm or smaller during rotation of the magnetic disc 4. Therefore, the width t1 of the opening 40 formed in the cartridge 11 must be 6 mm or smaller as can be understood from Fig. 5.

That is, the structure that the width t1 of the opening 40 formed in the cartridge 11 is 6 mm or smaller enables the amount of wobbling during the rotation of the magnetic disc 4 to be reduced to 20 µm or smaller. When the magnetic disc 4 is rotated at a high speed of 3000 rpm or higher, a stable state of contact between the magnetic head 31 and the magnetic disc 4 can be maintained.

As described above, the head structure 3 is introduced into the cartridge 11 through the opening 40 formed in the cartridge 11 when a recording/reproducing operation is performed. Therefore, when the head structure 3 has a large size, the width t1 of the opening 40 formed in the cartridge 11 cannot be reduced. Therefore, it is preferable that the magnetic head 31 to be included in the head structure 3 is manufactured by the thin-film forming process as described above. When the magnetic head 31 is formed by the thin-film forming process, the size of the head structure 3 which includes the magnetic head 31 can considerably be reduced. As a result, the width t1 of the opening 40 formed in the cartridge 11 can furthermore be reduced.

The reason why the load which is exerted from the head structure 3 on the magnetic disc 4 of the magnetic recording/reproducing apparatus us 1 is 75 mgf to 500 mgf will now be described.

When the load which is exerted from the head structure 3 on the magnetic disc 4 is too small, the value of half width PW50 of a solitary wave for recording/reproducing is enlarged excessively. As a result, recording/reproducing sensitivity deteriorates. When the load which is exerted from the head structure 3 on the magnetic disc 4 is too large, abrasion of the magnetic head 31 included in the head structure 3 easily occurs. Thus, the life of the magnetic head 31 is shortened.

The relationship between the load which is exerted from the head structure 3 on the magnetic disc 4 and the value of the half width PW50 of the solitary wave for recording/reproducing was examined. Moreover, the relationship between the load which is exerted from the head structure 3 on the magnetic disc 4 and the amount of abrasion of the magnetic head 31 included in the head structure 3 was examined. Results are shown in Fig. 6.

The half width PW50 of the solitary wave for recording/reproducing is a value defined as waveform width at a level at which the amplitude of the solitary reproduction waveform is halved. The half width PW50 was obtained by using a digital storage oscilloscope by removing noise by performing periodical addition. A fact is known that influences of a variety of magnetic recording parameters of the magnetic head and the recording medium are exerted on the half width PW50. Moreover, the half width PW50 is sensitive to the amount of a gap between the magnetic head and the recording medium, that is, the amount of spacing. Therefore, the half width PW50 is frequently used as an index indicating a state of contact between the magnetic head and the recording medium. In general, the state of connection between the magnetic head and the recording medium is satisfactory as the half width PW50 of the reproduction solitary wave is reduced. Thus, the linear recording density can be raised.

As can be understood from Fig. 6, when the load which is exerted from the head structure 3 on the magnetic disc 4 is too small, the value of the half width PW50 of the recording/reproducing solitary wave is enlarged excessively. Thus, the recording/reproducing sensitivity deteriorates. When the load is smaller than 75 mgf, the value of the half width PW50 of the recording/reproducing solitary wave is enlarged excessively. Thus, the recording/reproducing sensitivity considerably deteriorates. That is, when the load which is exerted from the head structure 3 on the magnetic disc 4 is smaller than 75 mgf, the magnetic head 31 included in the head structure 3 cannot be brought into satisfactorily contact with the magnetic disc 4. As a result, the linear recording density cannot be raised. Therefore, it is preferable that the load which is exerted from the head structure 3 on the magnetic disc 4 is 75 mgf or larger to improve the recording/reproducing sensitivity and raise the liner recording density.

The amount of abrasion of the magnetic head 31 included in the head structure 3 was measured after the magnetic head 31 and the magnetic disc 4 were brought into contact and slid each other for 200 hours. Note that the amount of abrasion was obtained by measuring the height of the slider 30 from a reference plane by using an AFM (Atomic Force Microscope). The magnetic head 31 was an inductive-type magnetic head having a head depth (the depth of the magnetic gap portion from the surface opposite to the magnetic disc) of 2.5 µm.

In general, an insurance of the life of the magnetic head about 2000 hours is required to put the magnetic head into practical use as a household magnetic head. The life of the head expires when the amount of abrasion of the head is made to be larger than the head depth. Therefore, the amount of abrasion of the head per 200 hours must be 0.25 µm or smaller to insure the life of 2000 hours.

As can be understood from Fig. 6, as the load which is exerted from the head structure 3 on the magnetic disc 4 is enlarged, the amount of abrasion of the head is monotonously enlarged. As can be understood from Fig. 6, the load which is exerted from the head structure 3 on the magnetic disc 4 must be 500 mgf or smaller to make the amount of abrasion of the head per 200 hours to be 0.25 µm or smaller to ensure the life of the head of 2000 hours. Therefore, it is preferable that the load which is exerted from the head structure 3 on the magnetic disc 4 is 500 mgf or smaller from a viewpoint of maintaining of a satisfactorily long life of the head.

Therefore, it is preferable that the load which is exerted from the head structure 3 on the magnetic disc 4 satisfies a range from 75 mgf to 500 mgf. The load which is exerted from the head structure 3 on the magnetic disc 4 is specified as described above. Thus, the amount of abrasion of the magnetic head 31 included in the head structure 3 can be reduced and a satisfactorily long life of the head can be maintained. Moreover, a stable state of contact between the magnetic head 31 included in the head structure 3 and the magnetic disc 4 can be maintained. As a result, the recording/reproducing sensitivity can be improved and the linear recording density can be raised.

Note that the load of the head which is 75 mgf to 500 mgf is a very small value as compared with that of the conventional recording/reproducing apparatus. As compared with the load of the head of, for example, the conventional 3.5-inch microfloppy disc, the load is about 1/10. That is, the preferred embodiment of the present invention is structured such that the load of the head is considerably reduced as compared with the conventional system. Therefore, a satisfactorily long life of the head can be maintained and the recording density and the transfer rate can significantly be improved.

When the load of the head is reduced as described above, the frictional force which is exerted between the magnetic head 31 and the magnetic disc 4 is reduced. Therefore, another advantage can be realized in that the power consumption of the spindle motor 2 which rotates the magnetic disc 4 can be reduced.

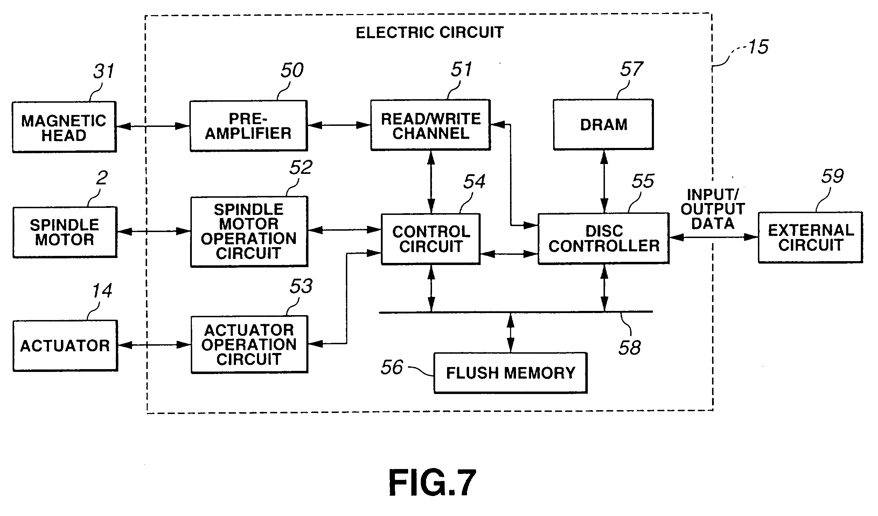

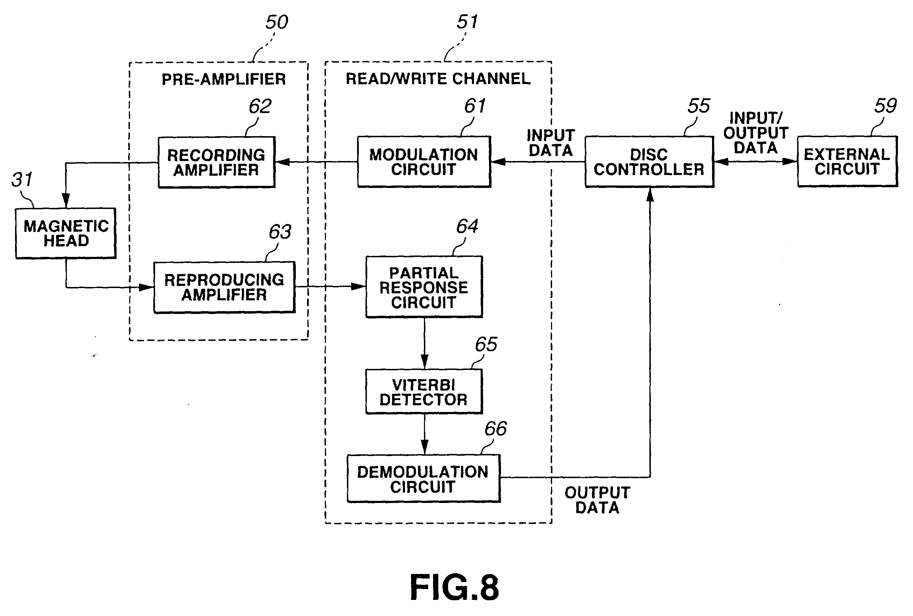

The circuit structure in the magnetic recording/reproducing apparatus 1 will now be described with reference to Figs. 7 and 8.

The magnetic recording/reproducing apparatus 1 incorporates an electric circuit 15 for processing signals required to record/reproduce the magnetic disc 4. As shown in Fig. 7, the electric circuit 15 includes a pre-amplifier 50, a read/write channel 51, a spindle motor operation circuit 52, an actuator operation circuit 53, a control circuit 54, a disc controller 55, a flush memory 56 and a DRAM (Dynamic Random-Access Memory) 57. Note that the control circuit 54, the disc controller 55 and the flush memory 56 are connected to a bus 58. Thus, communication of signals is permitted among the foregoing units through the bus 58. The electric circuit 15 is realized by LSI and electric elements.

The pre-amplifier 50 receives, from the magnetic head 31, a signal reproduced from the magnetic disc 4 when the signal is reproduced from the magnetic disc 4. Then, the pre-amplifier 50 amplifies the reproduction signal to supply the signal to the read/write channel 51. The pre-amplifier 50 receives, from the read/write channel 51, a signal to be recorded on the magnetic disc 4 when the signal is recorded on the magnetic disc 4. Then, the pre-amplifier 50 amplifies the signal to be recorded to supply the signal to the magnetic head 31.

When signal is reproduced from the magnetic disc 4, the read/write channel 51 receives, from the pre-amplifier 50, a signal reproduced from the magnetic disc 4. Then, the read/write channel 51 subjects the reproduction signal to a predetermined demodulation process and so forth to supply the processed signal to the disc controller 55. When a signal is recorded on the magnetic disc 4, the read/write channel 51 receives a signal to be recorded on the magnetic disc 4 from the disc controller 55. Then, the read/write channel 51 subjects the signal to be recorded to a predetermined modulation process and the like so as to supply the processed signal to the pre-amplifier 50.

The spindle motor operation circuit 52 is an operation circuit for rotating the spindle motor 2. When the magnetic disc 4 is recorded/reproduced, the spindle motor operation circuit 52 complies with a control signal supplied from the control circuit 54 to, at a predetermined speed of rotation, rotate the spindle motor 2 to which the magnetic disc 4 is secured. Thus, the magnetic disc 4 is rotated at a predetermined speed administrated by the control circuit 54.

The actuator operation circuit 53 is an operation circuit for operating the actuator 14. When the magnetic disc 4 is recorded/reproduced, the actuator operation circuit 53 complies with a control signal supplied from the control circuit 54 to operate the actuator 14 such that the magnetic head 31 is moved to the correct recording/reproducing position.

The control circuit 54 mainly performs servo control. Specifically, the control circuit 54 controls the operations of the spindle motor 2 and the actuator 14. That is, the control circuit 54 supplies a control signal to the spindle motor operation circuit 52 to rotate the magnetic disc 4 at a predetermined speed of rotation when the magnetic disc 4 is recorded/reproduced. When the magnetic disc 4 is recorded/reproduced, the control circuit 54 supplies a control signal to the actuator operation circuit 53 to move the magnetic head 31 to the recording/reproducing position. Note that the control circuit 54 receives signals from the read/write channel 51 and the disc controller 55 when the control circuit 54 performs the servo control. Thus, the control circuit 54 performs the servo control such that synchronization with the recording/reproducing operation is established.

A tracking servo pattern signal and an address signal are previously recorded on the magnetic disc 4. When the magnetic disc 4 is recorded/reproduced, the accurate position of the magnetic head 31 above the magnetic disc 4 is determined in accordance with the tracking servo pattern signal and the address signal previously recorded on the magnetic disc 4. That is, the magnetic recording/reproducing apparatus 1 causes the magnetic head 31 to detect the tracking servo pattern signal and the address signal previously recorded on the magnetic disc 4 when a recording/reproducing operation is performed. Then, the magnetic recording/reproducing apparatus 1 transmits the detection signals to the control circuit 54. In accordance with the detection signals, the control circuit 54 supplies a control signal to the actuator operation circuit 53. The signal is a signal for determining the amount of deviation between the positions of the track to be recorded/reproduced and the magnetic head 31 and instructing to correct the amount of the deviation. In response to the control signal, the actuator operation circuit 53 operates the actuator 14 to move the magnetic head 31. Thus, the foregoing amount of the deviation is corrected to correctly move the magnetic head 31 onto the track to be recorded/reproduced.

The disc controller 55 incorporates an arithmetic circuit to cause the arithmetic circuit to perform an arithmetic process to control an input/output interface with an external circuit 59. When a signal is reproduced from the magnetic disc 4, the disc controller 55 performs a process for determining the position from which the signal is reproduced. Moreover, the disc controller 55 performs a process for determining the position to which a signal is recorded when the signal is recorded on the magnetic disc 4.

The external circuit 59 is connected to the disc controller 55 through a predetermined interface. When a signal is reproduced from the magnetic disc 4, the disc controller 55 receives a reproduced signal from the read/write channel 51. Then, the disc controller 55 converts the signal into a predetermined form adaptable to the external circuit 59 so as to output the signal to the external circuit 59 through a predetermined interface. When a signal is recorded on the magnetic disc 4, the disc controller 55 receives a signal to be recorded from the external circuit 59 through a predetermined interface. Then, the disc controller 55 converts the signal to be recorded into a predetermined form adaptable to the signal process which is performed by the read/write channel 51. Then, the disc controller 55 supplies the signal to the read/write channel 51. When the disc controller 55 performs the foregoing signal process, the disc controller 55 uses the DRAM 57 as a buffer memory as necessary.

The flush memory 56 is a storage unit in which a program and so forth required for the operation of the magnetic recording/reproducing apparatus 1 are stored. For example, a firmware which is executed by the disc controller 55 is stored. That is, the disc controller 55 reads the firmware or the like stored in the flush memory 56 to execute the same so as to control the input/output interface with the external circuit 59 as described above.

The DRAM 57 is a dynamic random access storage unit which is connected to the disc controller 55. As described above, the DRAM 57 serves as the buffer memory in which a signal to be recorded or a reproduced signal is temporarily stored when the magnetic disc 4 is recorded/reproduced, the DRAM 57 being used by the disc controller 55.

Fig. 8 shows a flow of a signal to be recorded/reproduced when the magnetic recording/reproducing apparatus 1 having the foregoing circuit structure records/reproduces the magnetic disc 4.

When a signal is recorded on the magnetic disc 4, data to be recorded on the magnetic disc 4 is input from the external circuit 59 to the disc controller 55. Input data is first transmitted from the disc controller 55 to the read/write channel 51 so as to be subjected to a predetermined modulation process by a modulation circuit 61 provided for the read/write channel 51. Then, a signal subjected to the predetermined modulation process by the modulation circuit 61 is supplied to the pre-amplifier 50. Thus, the signal is subjected to a predetermined amplifying process by a recording amplifier 62 provided for the pre-amplifier 50. The signal to be recorded and subjected to the predetermined amplifying process by the recording amplifier 62 is supplied to the magnetic head 31. The magnetic head 31 records the signal on the magnetic disc 4.

When a signal is reproduced from the magnetic disc 4, a signal reproduced by the magnetic head 31 is supplied to the pre-amplifier 50. A reproducing amplifier 63 provided for the pre-amplifier 50 subjects the signal to a predetermined amplifying process. Then, the signal subjected to the predetermined amplifying process by the reproducing amplifier 63 is supplied to the read/write channel 51. In the read/write channel 51, a partial response circuit 64 first performs a waveform changing process using partial response. Then, a Viterbi detector 65 perform a Viterbi decoding process. Then, a demodulation circuit 66 performs other demodulation processes. An output of the demodulation circuit 66 is supplied to the disc controller 55 so as to be output to the external circuit 59 from the disc controller 55.

A signal process which is performed by the magnetic recording/reproducing apparatus 1 will now be described.

The magnetic recording/reproducing apparatus 1 is adapted to, for example, NRZI (Non Return to Zero Inverted) modulation as a method of modulating a signal to be recorded. That is, the magnetic recording/reproducing apparatus 1 records, on the magnetic disc 4, waveform trains (hereinafter called "waveform trains to be recorded") obtained by subjecting input codes which must be recorded to NRZI modulation.

The NRZI modulation is arranged such that the code "1" is inverted and code "0" is not inverted. When the foregoing NRZI modulation is employed, it is preferable that the minimum inversion interval Tₘᵢₙ (that is, it is preferable that the conversion ratio in encoding) of the waveform train to be recorded is long. From a viewpoint of reproducing clocks and an erase ratio when overwriting is performed, it is preferable that the maximum inversion interval Tₘₐₓ (that is, it is preferable that the conversion ratio in encoding) of the waveform train to be recorded is short.

The magnetic recording/reproducing apparatus 1 is adapted to a partial response method when the magnetic recording/reproducing apparatus 1 records/reproduces data with respect to the magnetic disc 4. The reason for this lies in that deterioration in the bit detection error rate must be prevented when the S/N ratio during the recording/reproducing operation deteriorates owing to raising of the recording density and the mechanical unstable factors.

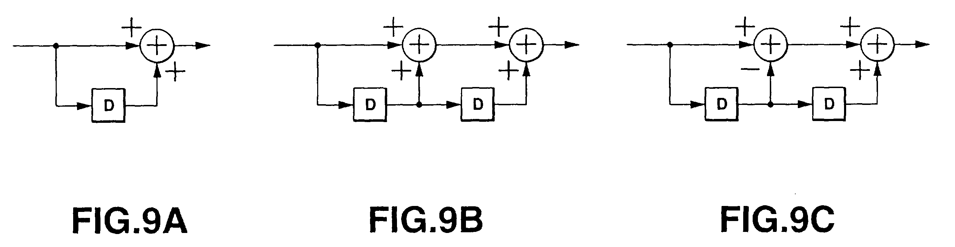

Fig. 9 shows an example of a logic circuit of the partial response. Fig. 9A is a diagram showing a class 1 partial response logic circuit. Fig. 9B is a diagram showing a class 2 partial response logic circuit. Fig. 9C is a diagram showing a class 4 partial response logic circuit. As shown in Fig. 9A, class 1 of the partial response is expressed by (1 + D). As shown in Fig. 9B, class 2 of the partial response is expressed by (1 + D) (1 + D). As shown in Fig. 9C, class 4 of the partial response is expressed by (1 - D) (1 + D).

Fig. 10 shows an example of a frequency characteristic realized when class 1 of the partial response is employed to perform a recording/reproducing operation. Fig. 10A is shows a frequency characteristic of a code to be recorded (that is, data to be input to the magnetic recording/reproducing apparatus 1) and subjected to a modulation process by the modulation circuit 61. Fig. 10B shows the frequency characteristic of a code to be recorded (that is, the code to be recorded on the magnetic disc 4) and subjected to the modulation process by the modulation circuit 61. Fig. 10C shows a frequency characteristic of a signal obtained by subjecting a signal reproduced from the magnetic disc 4 to a waveform equalizing process by the class 1 partial response. In the foregoing frequency characteristic, a frequency at which the power spectrum is zero is called a "null point"

As can be understood from Fig. 10, in case the partial response method is employed, signal detection can be performed when the quantity of high-frequency component is small. Therefore, in case of the high-frequency component of the reproduction signal deteriorates when a signal is reproduced from the magnetic disc 4, restoration of original data can be performed. Therefore, employment of the partial response method permits the recording density to be raised.

Although the class 1 partial response has been described with reference to Fig. 10, also class 2 and class 4 permit signal detection to be performed when the quantity of the high-frequency component is small. Specifically, signal detection is permitted when the quantity of the high-frequency component is small in the ascending order as class 2, class 1 and class 4.

As shown in Figs. 10B and 10C, null point N1 of the frequency characteristic of a code to be recorded on the magnetic disc 4 and null point N2 in a transmission function of a transmission passage of the partial response are made coincide with each other. Thus, the distance between signal points in the output of the transmission passage can be elongated. A code train capable of satisfying the foregoing condition is called a MSN (Matched Spectral Null) code train. In the MSN code train, the null point of the frequency characteristic of the MSN code train coincides with the null point of the transmission function of the partial response.

The modulation circuit 61 of the magnetic recording/reproducing apparatus 1 modulates a signal to be recorded on the magnetic disc 4 into a MSN code train. The signal modulated into the MSN code train by the modulation circuit 61 is recorded on the magnetic disc 4 by the magnetic head 31. Since the signal to be recorded on the magnetic disc 4 is modulated into the MSN code train, the distance between signal point of output of the transmission passage to be elongated. Thus, deterioration in the bit detection error rate can be prevented when the S/N ratio deteriorates in a recording/reproducing operation.

Specifically, when the class 1 partial response is employed, the modulation circuit 61 modulates a signal to be recorded on the magnetic disc 4 such that the power spectrum is zero at the same frequency as that of the null point of the frequency characteristic of the class 1 partial response and even a DC component is formed into a code train having a null point. The thus-modulated signal is recorded on the magnetic disc 4 by the magnetic head 31.

In the foregoing case, the partial response circuit 64 has a waveform equalizing function using the class 1 partial response. The Viterbi detector 65 has a decoding function using the maximum likelihood decoding method. When a signal is reproduced from the magnetic disc 4, the partial response circuit 64 subjects the signal reproduced from the magnetic disc 4 by the magnetic head 31 to a waveform equalizing process by the class 1 partial response. Moreover, the Viterbi detector 65 subjects the signal subjected to the waveform equalizing process by the partial response circuit 64 to a decoding process by the maximum likelihood decoding method.

When the class 2 partial response is employed, the modulation circuit 61 modulates a signal to be recorded on the magnetic disc 4 such that the power spectrum is zero at the same frequency as that of the null point of the frequency characteristic of the class 2 partial response and even a DC component is formed into a code train having a null point. Then, the thus-modulated signal is recorded on the magnetic disc 4 by the magnetic head 31.

In the foregoing case, the partial response circuit 64 has the waveform equalizing function using the class 2 partial response. The Viterbi detector 65 has the decoding function using the maximum likelihood decoding method. When a signal is reproduced from the magnetic disc 4, the partial response circuit 64 subjects a signal reproduced from the magnetic disc 4 by the magnetic head 31 to a waveform equalizing process using the class 2 partial response. The Viterbi detector 65 subjects the signal subjected to the waveform equalizing process by the partial response circuit 64 to the decoding process using the maximum likelihood decoding method.

When the class 4 partial response is employed, the modulation circuit 61 modulates a signal to be recorded on the magnetic disc 4 such that the power spectrum is zero at the same frequency as that of the null point of the frequency characteristic of the class 4 partial response. The thus-modulated signal is recorded on the magnetic disc 4 by the magnetic head 31.

In the foregoing case, the partial response circuit 64 has the waveform equalizing function using the class 4 partial response. The Viterbi detector 65 has the decoding function using the maximum likelihood decoding method. When a signal is reproduced from the magnetic disc 4, the magnetic disc 4 subjects a signal reproduced from the magnetic disc 4 by the magnetic head 31 to the waveform equalizing process using the class 4 partial response. Then, the Viterbi detector 65 subjects the signal subjected to the waveform equalizing process by the partial response circuit 64 to the decoding process using the maximum likelihood decoding method.

As shown in Fig. 10, the null point N2 of the transmission function of the transmission passage of the class 1 partial response is half of the clock frequency Fs of the code which must be recorded and which has not been subjected to the modulation process. Therefore, repetition of "1" and "0" contained in the code train must be removed to form the signal to be recorded on the magnetic disc 4 into the MSN code train.

The null point of the transmission function of the transmission passage of the class 4 partial response corresponds to the DC component before the modulation process. Therefore, a code train having the power spectrum which is zero at the same frequency as that of the null point of the frequency characteristic of the class 4 partial response is formed by performing modulation when the signal to be recorded on the magnetic disc 4 is modulated such that the DC component of the code to be recorded is null. Specifically, the sum (RDS: Running Digital Sum) of "1" and "0" contained in the code train satisfies a predetermined range. As a method for expressing the foregoing condition, a variety of DC free coding methods may be employed. When the class 4 partial response and the DC free coding method are combined with each other, the distance between signal points of the output of the transmission passage can be elongated. Therefore, in case of the S/N ratio deteriorates when a recording/reproducing operation is performed, deterioration in the bit detection error rate can be prevented.

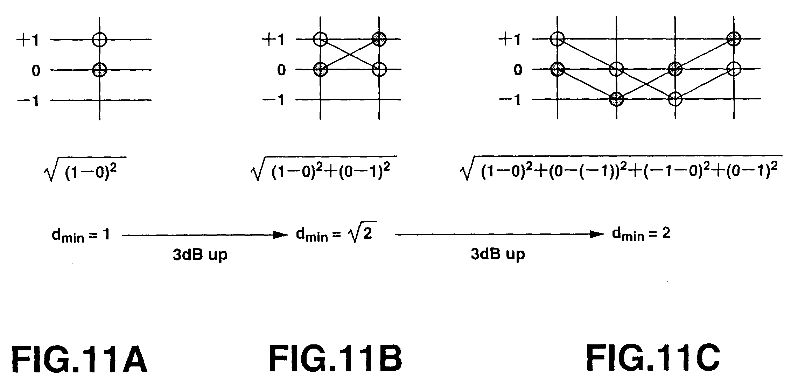

When the partial response is employed, the distance between signal points of the output of the transmission passage can be elongated. Thus, in case of the S/N ratio deteriorates when a recording/reproducing operation is performed, deterioration in the bit detection error rate can be prevented. The foregoing fact will now be described with reference to Fig. 11.

Fig. 11A is a trellis graph formed in a case of a method (Bit by Bit method) which does not use the partial response and with which each bit is independently detected. As shown in Fig. 11A, distance dₘᵢₙ = {(1 - 0)2}^{1/2} = 1 between signal points in the case of the Bit by Bit method.

Fig. 11B is a trellis graph formed in a case where a method (the PRML method) employing the class 1 partial response is used. The PRML method is performed such that the process for modulating a signal to be recorded on the magnetic disc 4 is not performed with which a code train is formed which has the power spectrum which is zero at the same frequency as that of the null point of the frequency characteristic of the class 1 partial response and even a DC component has a null point. As shown in Fig. 11B, distance dₘᵢₙ between signal points in the case of the PRML method such that dₘᵢₙ = {(1 - 0)² + (0 - 1)²}^{1/2} = 2^{1/2}.

Fig. 11C is a trellis graph formed in a case where a method (the TCPR method) with which a decoding process using the maximum likelihood decoding method is performed. The TCPR method is performed such that the process for modulating a signal to be recorded on the magnetic disc 4 is performed with which a code train is formed which has the power spectrum which is zero at the same frequency as that of the null point of the frequency characteristic of the class 1 partial response and even a DC component has a null point. The TCPR method is arranged such that a decoding method is performed which is combination of the class 1 partial response and the maximum likelihood decoding method. As shown in Fig. 11C, distance dₘᵢₙ between signal points in the case of the TCPR method is such that dₘᵢₙ = {(1 - 0)² + (0 - (- 1))² + (- 1 - 0)² + (0 - 1)²}^{1/2} = 2.

As described above, the Bit by Bit method with which each bit is independently detected realizes the distance dₘᵢₙ between signal points which is one. The PRML method using the class 1 partial response realizes distance dₘᵢₙ between signal points which is 2^{1/2}. Thus, the S/N ratio can be improved by about 3 dB. Therefore, when the PRML method is employed, deterioration in the bit detection error rate can be prevented as compared with the Bit by Bit method in case of the S/N ratio deteriorates.

The PRML method using the class 1 partial response realizes distance dₘᵢₙ between signal points which is 2^{1/2}. The TCPR method which employs the class 1 partial response and with which the decoding process using the maximum likelihood decoding method is performed realizes distance dₘᵢₙ between signal points which is two. Thus, the S/N ratio can furthermore be improved by about 3 dB. Therefore, when the TCPR method is employed, deterioration in the bit detection error rate can be reduced as compared with the PRML method in case of the S/N ratio deteriorates.

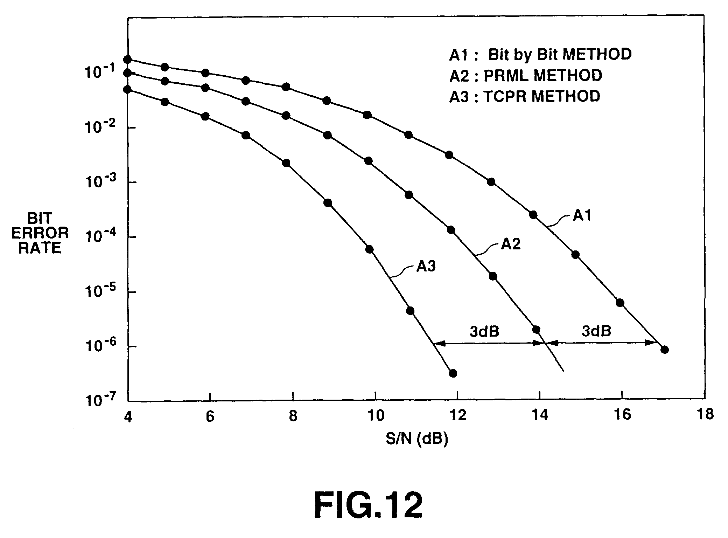

Fig. 12 shows the relationship between the bit error rate and the S/N ratio in a case of ON-track realized with each of the methods (the Bit by Bit method, the PRML method and the TCPR method).

Referring to Fig. 12, A1 shows a case where a code to be recorded is subjected to 8/10 modulation to eliminate the DC component and recording/reproducing is performed by the Bit by Bit method. That is, A1 shows a case where the partial response is not employed.

In Fig. 12, A2 shows a case where a code to be recorded is subjected to 8/10 modulation to eliminate the DC component and recording/reproducing is performed by the PRML method. That is, A2 shows a case where 8/10 conversion code and the class 1 partial response detection method are combined with each other.

In Fig. 12, A3 shows a case where a code to be recorded is subject to 16/20 modulation to form a MSN code train and recording/reproducing is performed by the TCPR method. That is, A3 shows a case where modulation into the MSN code train, the class 1 partial response detection method and the maximum likelihood decoding method are combined with one another.

As can be understood from Fig. 12, the bit error rate is lowered with the PRML method as compared with the Bit by Bit method. The bit error rate is lowered with the TCPR method as compared with the PRML method. When a bit error rate of, for example, 10⁻⁶ is realized, the Bit by Bit method requires a high S/N ratio of about 17 dB. On the other hand, the PRML method requires only a low S/N ratio of about 14 dB to 15 dB to realize the bit error rate of 10⁻⁶. The TCPR method requires only a low S/N ratio of about 11 dB to 12 dB to realize the bit error rate of 10⁻⁶.

As described above, employment of the PRML method enables the S/N ratio required to detect a signal to be smaller than that required for the Bit by Bit method. As a result, the recording wavelength can be shortened. Thus, the recording density can be raised. When the TCPR method is employed, the S/N ratio required to detect a signal can furthermore be lowered as compared with the PRML method. As a result, the recording wavelength can furthermore be shortened. Thus, the recording density can furthermore be raised.

The linear recording density and the track density in an actual recording format must be determined by measuring the OFF-track characteristic in an overwriting state. Therefore, the modulation and demodulation method for performing recording/reproducing was varied to actually perform a recording/reproducing operation to measure realized OFF-track characteristics. Results will now be described.

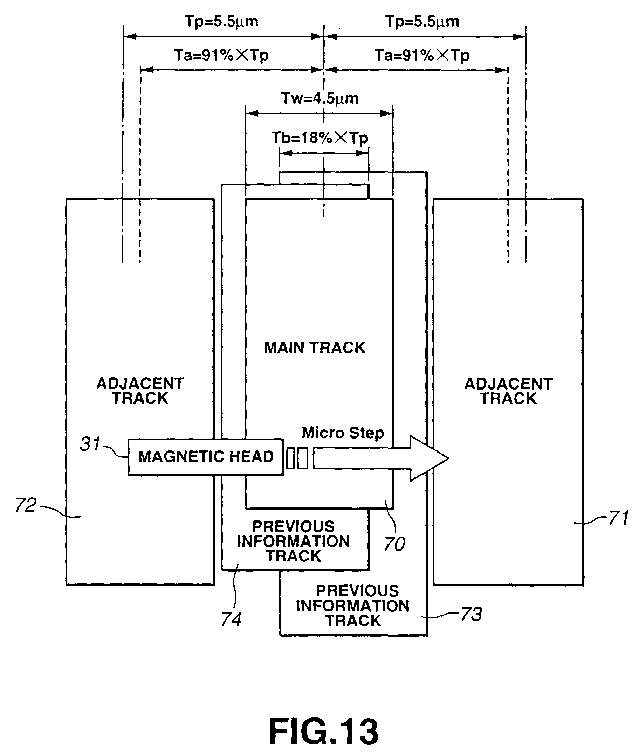

Conditions under which the OFF-track characteristic was measured will now be described with reference to Fig. 13. The track pitch Tp was 5.5 µm and the width Tw of each recording track was 4.5 µm.

The OFF-track characteristic was measured such that adjacent tracks 71 and 72 were initially recorded on the two sides of a main track 70 to which recording/reproducing was performed. At this time, distance Ta between the track center of the main track 70 and the track centers of the adjacent tracks 71 and 72 was 91 % of the track pitch Tp. Then, recording of first previous information track 73 was performed at a position somewhat shifted to the adjacent track 71 from the track center of the main track 70. Moreover, recording of second previous information track 74 was performed at a position somewhat shifted from the track center of the main track 70 toward the other adjacent track 72. The first and second previous-information tracks 73 and 74 were symmetrically shifted in a lateral direction with respect to the track center of the main track 70. Moreover, the width of the overlapping portion is 18 % of the track pitch Tp. Then, recording was performed. Then, a predetermined signal was recorded on the main track 70 in an ON-track state.

After recording the signal on each track was performed, the predetermined signal recorded on the main track 70 was reproduced by the magnetic head 31. Moreover, the position of the magnetic head 31 was gradually shifted to detect change in the bit error rate. The amount of OFF-track of the magnetic head 31 realized when the bit error rate was higher than 10⁻⁵ was measured. A bit error rate of 10⁻⁵ was employed as a reference for measurement of the OFF-track margin. Namely, the OFF-track margin indicates an allowable amount of OFF-track of the magnetic head 31 when the bit error rate of 10⁻⁵ or lower is specified.

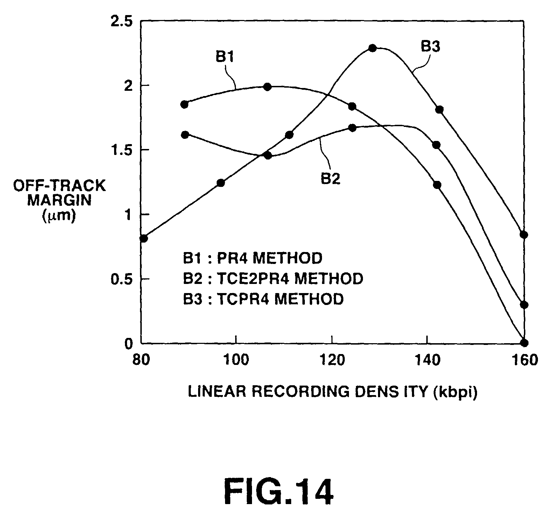

The foregoing measurement of the OFF-track margin was performed by varying the linear recording density so that the relationship between the OFF-track margin and the linear recording density was examined. Results are shown in Fig. 14. Note that B1 shown in Fig. 14 indicates a result of measurement of the method which is combination of 8/9 modulation and the class 4 partial response and in which the maximum likelihood decoding method is not employed when recording/reproducing is performed (a PR4 method). In Fig. 14, B2 indicates a result of measurement of the method (a TCE2PR4 method) which is combination of 16/18 modulation, the class 4 partial response and the maximum likelihood decoding method to perform recording/reproducing. In Fig. 14, B3 indicates a result of measurement of the method (a TCPR1 method) which is combination of 16/20 modulation, the class 1 partial response and the maximum likelihood decoding method to perform recording/reproducing.

As shown in Fig. 14, the relationship between the OFF-track margin and the linear recording density varies according to the modulation and demodulation method employed when the recording/reproducing is performed. Among results of measurement shown in Fig. 14, a largest OFF-track margin was measured when the linear recording density was about 130 kbpi and the TCPR1 method was employed. That is, when the linear recording density was about 130 kbpi and the TCPR1 method was employed, a large OFF-track margin of 2 µm or larger was obtained in case of the track width was 5.5 µm. Thus, stable recording/reproducing was permitted. The track width of the conventional magnetic disc is about 10 µm. The track width of 5.5 µm is a very small value as compared with the track width of the conventional magnetic disc. That is, the magnetic recording/reproducing apparatus 1 is arranged to have the linear recording density of about 130 kbpi and adapted to the TCPR1 method. Thus, the recording density can considerably be raised as compared with the conventional magnetic disc.

As described above, the magnetic recording/reproducing apparatus according to embodiments of the present invention is arranged such that the load which is exerted from the head structure on the magnetic disc satisfies 75 mgf to 500 mgf when a signal is recorded/reproduced with respect to a magnetic disc. Since the load of the head structure which is exerted on the magnetic disc is specified as described above, the amount of abrasion of the magnetic head can be reduced and a stable state of contact between the magnetic disc and the head structure can be maintained.

Therefore, according to embodiments of the present invention, a magnetic recording/reproducing apparatus can be provided with which levitation of the magnetic head can be prevented in case of the speed of rotation of the magnetic disc is raised when a recording/reproducing is performed. Thus, the recording density and the transfer rate can furthermore be raised. Moreover, the amount of abrasion of the magnetic head can be reduced.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A magnetic recording/reproducing apparatus for recording/reproducing a signal with respect to a magnetic disc having a magnetic layer formed on a resin substrate thereof, said magnetic recording/reproducing apparatus comprising:
a head structure incorporating a slider which is brought into contact and slid on the surface of the magnetic disc when recording/reproducing with respect to the magnetic disc is performed and which includes a magnetic head for recording a magnetic signal on the magnetic disc and/or reproducing a magnetic signal from the magnetic disc;
support means for supporting said head structure; and
rotating means for rotating the magnetic disc when a signal is recorded/reproduced with respect to the magnetic disc, wherein
said support means supports said head structure such that a load which is exerted from said head structure on the magnetic disc which is being rotated by said rotating means satisfies a range from 75 mgf to 500 mgf.

2. A magnetic recording/reproducing apparatus according to claim 1, wherein
said slider constituting said head structure has a plurality of contact portions which are brought into contact with the magnetic disc when a signal is recorded/reproduced with respect to the magnetic disc, and said magnetic head is included in at least one of said contact portions.

3. A magnetic recording/reproducing apparatus according to claim 1, wherein
said head structure includes an inductive-type magnetic head formed by a thin-film forming process to serve as a magnetic head for performing a recording/reproducing operation with respect to the magnetic disc.

4. A magnetic recording/reproducing apparatus according to claim 1, wherein
said head structure includes a magnetoresistance-effect magnetic head formed by a thin-film forming process to serve as a magnetic head for reproducing a signal from the magnetic disc.

5. A magnetic recording/reproducing apparatus according to claim 1, wherein
a portion of the load which is exerted from the dead weight of said head structure is 1/10 or smaller than a load which is exerted when said support means presses said head structure against the magnetic disc.

6. A magnetic recording/reproducing apparatus according to claim 1, wherein
a pair of said head structure and said support means is provided, and the magnetic disc is sandwiched between said head structure and said support means to perform an operation for recording/reproducing a signal with respect to the magnetic disc.

7. A magnetic recording/reproducing apparatus according to claim 1, wherein
the magnetic disc is accommodated in a cartridge having an opening into which said head structure is introduced when a recording/reproducing operation is performed,
said opening of said cartridge is formed at least from the outermost recording region of the magnetic disc to the innermost recording region, and the length of said opening in the circumferential direction of the magnetic disc is 6 mm or shorter.

8. A magnetic recording/reproducing apparatus according to claim 1, wherein
said rotating means rotates the magnetic disc at a speed of rotation of 3000 rpm or higher when recording/reproducing with respect to the magnetic disc is performed.

9. A magnetic recording/reproducing apparatus according to claim 1, further comprising:
modulating means for modulating a signal to be recorded on the magnetic disc into a MSN (Matched Spectral Null) code train, wherein
the signal modulated to the MSN code train by said modulating means is rotated on the magnetic disc by said magnetic head.

10. A magnetic recording/reproducing apparatus according to claim 1, further comprising:
modulating means for modulating a signal to be recorded on the magnetic disc such that when an assumption is made that the frequency at which the power spectrum is zero is a null point, the power spectrum is zero at the same frequency as that of a null point of a frequency characteristic of class 1 partial response and even a DC component is formed into a code train having a null point, wherein
a signal modulated by said modulating means is recorded on a magnetic disc by said magnetic head.

11. A magnetic recording/reproducing apparatus according to claim 10, further comprising:
demodulating means having a waveform equalizing function using class 1 partial response and a decoding function using a maximum likelihood decoding method, wherein
a signal reproduced from the magnetic disc by said magnetic head is demodulated by said demodulating means.

12. A magnetic recording/reproducing apparatus according to claim 1, further comprising:
modulating means for modulating a signal to be recorded on the magnetic disc such that when an assumption is made that the frequency at which the power spectrum is zero is a null point, the power spectrum is zero at the same frequency as that of a null point of a frequency characteristic of class 2 partial response and even a DC component is formed into a code train having a null point, wherein
a signal modulated by said modulating means is recorded on a magnetic disc by said magnetic head.

13. A magnetic recording/reproducing apparatus according to claim 12, further comprising:
demodulating means having a waveform equalizing function using class 2 partial response and a decoding function using a maximum likelihood decoding method, wherein
a signal reproduced from the magnetic disc by said magnetic bead is demodulated by said demodulating means.

14. A magnetic recording/reproducing apparatus according to claim 1, further comprising:
modulating means for modulating a signal to be recorded on the magnetic disc such that when an assumption is made that the frequency at which the power spectrum is zero is a null point, the power spectrum is zero at the same frequency as that of a null point of a frequency characteristic of class 4 partial response and even a DC component is formed into a code train having a null point, wherein
a signal modulated by said modulating means is recorded on a magnetic disc by said magnetic head.

15. A magnetic recording/reproducing apparatus according to claim 14, further comprising:
demodulating means having a waveform equalizing function using class 4 partial response and a decoding function using a maximum likelihood decoding method, wherein
a signal reproduced from the magnetic disc by said magnetic head is demodulated by said demodulating means.
